# EUROPEAN PATENT APPLICATION

(11) **EP 4 567 978 A1**
(43) Date of publication of application: **11.06.2025**
(21) Application number: 22953583.6
(22) Date of filing: 04.08.2022
(51) Int. Cl.: H01M 50/188, H01M 50/543

(54) **CASE, ELECTROCHEMICAL DEVICE AND MANUFACTURING METHOD THEREFOR, AND ELECTRONIC DEVICE**

(71) Applicant: Ningde Amperex Technology Limited, Ningde, Fujian 352100 (CN)
(72) Inventor: ZHANG, Guowen, Ningde, Fujian 352100 (CN)
(74) Representative: Icosa
(86) International application number: PCT/CN2022/110312
(87) International publication number: WO 2024/026774

(57) **Abstract**

Some embodiments of this application disclose a housing, an electrochemical device and a manufacturing method thereof, and an electronic device. The housing includes an electrode post assembly and a first housing in which an accommodation cavity is formed. A mounting hole is created on the first housing. The electrode post assembly includes a rivet, a first gasket, a second gasket, and a pressing piece. The rivet includes a first end portion, a shaft portion, and a second end portion connected in sequence. The shaft portion passes through the mounting hole. The first gasket surround the shaft portion, and is disposed between the first end portion and the first housing. The second gasket surround the shaft portion, and is disposed between the second end portion and the first housing. The pressing piece is disposed around the shaft portion, and disposed between the first end portion and the first gasket. Viewed along an axial extension direction of the shaft portion, a projection of the shaft portion is located inside a projection of the first end portion and a projection of the second end portion. A projection of the pressing piece is located inside the projection of the first end portion. The first end portion coordinates with the second end portion to compress the first gasket and the second gasket to seal the mounting hole, thereby improving hermeticity at the mounting hole.

## Description

### TECHNICAL FIELD

Some embodiments of this application relate to the technical field of energy storage, and in particular, to a housing, an electrochemical device and a manufacturing method thereof, and an electronic device.

### BACKGROUND

An electrochemical device is a device that converts external energy into electrical energy and internally stores the electrical energy so that the electrical energy is readily available to an electronic device such as a mobile phone, a tablet computer, or a laptop computer. Generally, an electrochemical device includes a housing and an electrode assembly. An accommodation cavity is formed in the housing. The electrode assembly is accommodated in the accommodation cavity. The electrode assembly includes a first electrode plate, a separator, and a second electrode plate. The separator is disposed between the first electrode plate and the second electrode plate. The first electrode plate and the second electrode plate are of different polarities.

To meet the needs of different mounting environments, a mounting hole needs to be created on the housing of some electrochemical devices, and an electrode post needs to be mounted at the mounting hole. The electrode post serves as one of electrodes of the electrochemical device. However, when the mounting hole is created on the housing to mount the electrode post, a gap exists between the electrode post and the housing. Through the gap, an electrolyte solution loaded in the housing is prone to leak to the outside. Therefore, it is necessary to design an electrode post assembly hermetically mounted to the housing, so as to reduce the risk of electrolyte leakage of the electrochemical device.

### SUMMARY

An objective of this application is to provide a housing, an electrochemical device and a manufacturing method thereof, and an electronic device to reduce the electrolyte leakage risk of the electrochemical device.

To achieve the above objective, this application discloses the following technical solution:
A housing is disclosed, including a first housing and an electrode post assembly. An accommodation cavity is formed in the first housing. A through mounting hole is created on the first housing. The mounting hole communicates with the accommodation cavity. The electrode post assembly includes a rivet, a first gasket, a second gasket, and a pressing piece. The rivet includes a shaft portion, a first end portion, and a second end portion. The shaft portion passes through the mounting hole. The first end portion is connected to one end of the shaft portion, and the second end portion is connected to another end of the shaft portion. A projection of the shaft portion is located inside a projection of the first end portion and the second end portion in a first direction. The first direction is an axial extension direction of the shaft portion. The first gasket surround the shaft portion. At least a part of the first gasket is disposed between the first end portion and the first housing in the first direction. The second gasket surround the shaft portion. At least a part of the second gasket is disposed between the second end portion and the first housing in the first direction. The pressing piece is disposed around the shaft portion. In the first direction, the pressing piece is disposed between the first end portion and the first gasket, and a projection of the pressing piece is located inside the projection of the first end portion. The first end portion coordinates with the second end portion to compress the first gasket and the second gasket to seal the through mounting hole.

The electrode post assembly in the housing provided in this application includes a pressing piece in addition to the rivet, the first gasket, and the second gasket. Along the first direction, the projection of the pressing piece is located inside the projection of the first end portion. In other words, a cross-sectional profile of the pressing piece is smaller than a cross-sectional profile of the first end portion. In this way, the first end portion presses against the pressing piece in such a way that the pressure exerted by the pressing piece on the first gasket is greater than the pressure exerted when the first end portion directly presses against the first gasket, thereby leading to a higher degree of deformation of the pressed part at which the first gasket touches the pressing piece. Due to the tendency of the first gasket to restore the original shape, the first gasket presses against the pressing piece more closely, thereby improving the hermeticity at the position of contact between the first gasket and the pressing piece. Therefore, the housing provided in this application is of high hermeticity at the mounting hole, and may reduce the risk of sealing failure between the first end portion and the first gasket. In addition, a pressing piece is added in this application so that the first end portion indirectly presses against the first gasket. Compared with the technical solution in which the first end portion directly presses against the first gasket, this application increases the overall thickness of the part between the first end portion and the second end portion. The amount of deformation required for deforming the shaft portion of the rivet in the first direction becomes smaller, thereby reducing the risk that the first gasket is warped against the first housing in the first direction, and improving the hermeticity of the electrochemical device at the mounting hole.

In some embodiments, viewed along the first direction, the pressing piece is in a closed shape around the shaft portion. This reduces the risk that the electrolyte solution enters the mounting hole through the pressing piece, and improves the hermeticity of the first housing.

In some embodiments, the pressing piece and the first end portion are a one-piece member. This may save the step of mounting the pressing piece, and save the time required for assembling the housing.

In some embodiments, the pressing piece and the first gasket are a one-piece member. This may save the step of mounting the pressing piece, and save the time required for assembling the housing.

In some embodiments, in the first direction, a projection of an edge of the second end portion is located inside the projection of the pressing piece. In this way, the second end portion is facilitated to receive the pressure exerted by the pressing piece, thereby increasing the degree of compression on the gasket and improving the hermeticity of the first housing at the mounting hole.

In some embodiments, the second end portion is formed by a riveting process. This facilitates the riveting process and disperses the riveting force through the pressing piece, thereby enhancing the sealing effect and reducing the risk of gasket warping.

In some embodiments, the pressing piece includes a first surface and a second surface connected to the first surface. The first surface is adjacent to the second surface. The first surface abuts the first end portion. The second surface is in contact with a surface of the shaft portion. This improves the hermeticity between the pressing piece and the shaft portion, thereby reducing the electrolyte leakage risk of the electrochemical device.

In some embodiments, hardness of the pressing piece is greater than hardness of the first gasket. This reduces the risk that the pressing piece is deformed but without deforming the first gasket in the riveting process, and improves the hermeticity between the first end portion and the first gasket.

In some embodiments, viewed along the first direction, a projected area of the first end portion is S₁, a projected area of the shaft portion is S₃, and a projected area of the pressing piece is S₄, satisfying: S₄/(S₁ - S₃) ≤ 1/2. In this way, an edge part of the pressing piece, which is away from the shaft portion, receives an appropriate force of the rivet, and the first gasket, the pressing piece, and the first end portion abut each other closely, thereby improving the hermeticity of the electrode post assembly at the mounting hole.

In some embodiments, viewed along the first direction, a projected area of the second end portion is S₂, a projected area of the shaft portion is S₃, and a projected area of the pressing piece is S₄, satisfying: S₄/(S₂ - S₃) ≤ 1/2. In this way, an edge part of the pressing piece, which is away from the shaft portion, receives an appropriate force of the rivet, and the first gasket, the pressing piece, and the first end portion abut each other closely, thereby improving the hermeticity of the electrode post assembly at the mounting hole.

In some embodiments, the pressing piece is stressed by the rivet in a riveting process to squeeze the first gasket so that the first gasket is deformed under pressure to form a recessed region, and so that at least a part of the pressing piece is embedded into the recessed region of the first gasket. This increases the degree of compression on the first gasket by the pressing piece, and improves the hermeticity of the first housing at the mounting hole.

In some embodiments, the shaft portion is cylindrical, and a diameter of the shaft portion is D mm, satisfying: 0.3 ≤ D ≤ 5. When the diameter of the shaft portion falls within this range, an appropriate current-carrying capacity may be provided. At the same time, the dimensional requirements of the shaft portion at the mounting hole of the first housing are lowered, thereby reducing the risk that the amount of material of the first housing at the mounting hole is excessively cut away, and increasing the strength of the first housing.

In some embodiments, the first gasket includes a first body and a first flange. The first body surround the shaft portion and disposed between the first end portion and the first housing. The first flange is formed by extending an edge of the first body away from the second gasket. The first body and the first flange define a first groove.

On the one hand, the first flange reduces the impact caused by free electrolyte solution on the first end portion and the edge of the first gasket, and reduces the possibility that the electrolyte solution enters the clearance between the first end portion and the pressing piece from the edge of the first body, thereby reducing the risk that the electrolyte solution leaks out of the first housing along the contact surface between the first gasket and the pressing piece, and along the contact surface between the first end portion and the pressing piece. On the other hand, this reduces the risk of swelling when the first gasket is made of a polymer material, and improves the hermeticity at the mounting hole. Moreover, the first flange reduces the possibility of contact between the first end portion and the first housing, and reduces the risk of a short-circuit between the first end portion and the first housing.

In some embodiments, both the pressing piece and the first end portion are disposed in the first groove. In this way, high hermeticity is achieved. At the same time, the length of the electrode post assembly in the first direction is shortened, thereby improving the hermeticity at the mounting hole.

In some embodiments, the electrode post assembly further includes a third gasket. The third gasket surround the shaft portion. At least a part of the third gasket is disposed between the second end portion and the second gasket in the first direction, and a projection of the third gasket is located inside a projection of the second gasket. With the third gasket disposed, the second end portion indirectly presses the second gasket through the third gasket. Compared to the technical solution in which the second end portion directly presses the second gasket, the technical solution hereof reduces the degree of deformation of the pressed second gasket and reduces the risk that the edge part of the second gasket is warped against the first housing.

In some embodiments, the second gasket includes a second body and a second flange. The second body surround the shaft portion and disposed between the second end portion and the first housing to separate the second end portion from the first housing. The second flange is formed by extending an edge of the second body away from the first gasket. The second body and the second flange define a second groove. The third gasket is located in the second groove. The second flange reduces the risk of contact between the second end portion and the first housing, and reduces the risk of a short-circuit between the second end portion and the first housing.

In some embodiments, in the first direction, the projection of the pressing piece is located inside a projection of the third gasket. Such an arrangement facilitates uniform transfer of the sealing force of the second end portion to the pressing piece, thereby improving the sealing effect.

In some embodiments, the third gasket is made of a metal material. Such an arrangement reduces the possibility that excessive stress is exerted by the second end portion on the second gasket in the sealing process, and impairs the sealing effect. Such an arrangement also provides a position at which the stress works in the sealing process of the second end portion.

In some embodiments, the thickness of the first gasket along the first direction is T₁ mm, satisfying: 0.1 ≤ T₁ ≤ 5; and the thickness of the second gasket along the first direction is T₂ mm, satisfying: 0.1 ≤ T₂ ≤ 5. With such settings, the thicknesses of the first gasket and the second gasket in the first direction are appropriate, thereby reducing the risk that the first gasket and the second gasket are unduly thin and crushed during riveting, and also reducing the footprint of the first gasket and the second gasket.

In some embodiments, the first end portion is located inside the accommodation cavity, and the second end portion is located outside the accommodation cavity.

In some embodiments, the first housing is made of a metal material. In some embodiments, the rivet is made of a material including aluminum, copper, aluminum alloy, or copper alloy. In some embodiments, the first gasket is made of a material including at least one of polyethylene, polypropylene, polytetrafluoroethylene, or fluororubber. In some embodiments, the second gasket is made of a material including at least one of polyethylene, polypropylene, polytetrafluoroethylene, or fluororubber. In some embodiments, the pressing piece is made of a metal material.

To achieve the above objective, this application discloses the following technical solution:
An electrochemical device is disclosed, including the housing disclosed above, and an electrode assembly. The electrode assembly is located in the accommodation cavity. The electrode assembly is electrically connected to the rivet. In this way, the electrochemical device made by using the above housing is highly hermetic, and improves the safety of the electrochemical device.

In some embodiments, the first housing is a conductor. The first gasket and the second gasket are insulators. The electrode assembly includes a first electrode plate and a second electrode plate that are of opposite polarities. The first electrode plate is electrically connected to the rivet, and the second electrode plate is electrically connected to the first housing.

To achieve the above objective, this application discloses the following technical solution:
A method for manufacturing the electrochemical device is disclosed, which is applied to the electrochemical device disclosed above. The method includes the following steps: preparing the housing; and mounting the electrode assembly into the housing. The step of preparing the housing includes: providing an electrode post assembly feedstock and the first housing; and mounting the electrode post assembly feedstock to the first housing, and performing a riveting process on the electrode post assembly feedstock to obtain the electrode post assembly, during which the pressing piece squeezes the first gasket by being stressed in the riveting process.

In some embodiments, the first gasket is deformed under pressure to form a recessed region, so that at least a part of the pressing piece is embedded into the recessed region of the first gasket.

To achieve the objective hereof, this application discloses the following technical solution: an electronic device, including the electrochemical device disclosed above.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a top view of an electrochemical device according to an embodiment of this application;
FIG. 2 is a schematic structural diagram of FIG. 1 sectioned along a line AA according to an embodiment of this application;
FIG. 3 is a schematic diagram of an electrode assembly shown in FIG. 2 sectioned along a line BB;
FIG. 4 is another schematic diagram of an electrode assembly shown in FIG. 2 sectioned along a line BB;
FIG. 5 is a schematic structural diagram of FIG. 1 sectioned along a line AA according to another embodiment;
FIG. 6 is a schematic structural diagram of a part of a first side plate shown in FIG. 5;
FIG. 7 is a schematic diagram of a part of the structure shown FIG. 6;
FIG. 8 is a schematic diagram before a rivet in FIG. 7 is subjected to a riveting process;
FIG. 9 is a schematic structural diagram of FIG. 1 sectioned along a line AA according to still another embodiment;
FIG. 10 is a schematic diagram before a rivet is subjected to a riveting process;
FIG. 11 is a schematic diagram of the rivet in FIG. 10 further stressed;
FIG. 12 is a schematic diagram of the rivet in FIG. 11 after completion of a riveting process;
FIG. 13 is a top view of assembling a pressing piece to a shaft portion according to an embodiment;
FIG. 14 is a top view of assembling a pressing piece to a shaft portion according to another embodiment;
FIG. 15 is a schematic diagram of another circumstance of FIG. 12 and FIG. 15 hides a pressing piece and shows a first gasket in which an accommodation trough is provided;
FIG. 16 is a top view of assembling a pressing piece to a shaft portion according to still another embodiment;
FIG. 17 is a schematic diagram of projected areas of a first end portion, a second end portion, a pressing piece, and a shaft portion projected along a first direction;
FIG. 18 is a schematic diagram when a pressing piece and a first end portion in FIG. 12 are a one-piece member;
FIG. 19 is a schematic diagram when a pressing piece and a first gasket in FIG. 12 are a one-piece member; and
FIG. 20 is a structural block diagram of an electronic device according to another embodiment of this application.

List of reference numerals: 100. electrochemical device; 200. electrode assembly; 300. housing; 311. accommodation cavity; 201. first electrode plate; 202. second electrode plate; 203. separator; 310. first housing; 320. electrode post assembly; 312. mounting hole; 313. first side plate; 314. second side plate; 315. third side plate; 316. fourth side plate; 317. first plate; 321. rivet; 322. first gasket; 323. second gasket; 324. pressing piece; 325. third gasket; 3211. shaft portion; 3212. first end portion; 3213. second end portion; 321'. rivet feedstock; 3221. accommodation trough; 3223. first body; 3224. first flange; 3225. first groove; 3231. second body; 3232. second flange; 3226. extension portion; 3227. bulge; 318. second plate; 32121. boss; 3233. second groove; 3241. first surface; 3242. second surface; 500. electronic device; 3211'. countersink; 3212'. connecting portion.

### DETAILED DESCRIPTION OF EMBODIMENTS

For ease of understanding this application, the following describes this application in more detail with reference to drawings and specific embodiments. It is hereby noted that an element referred to herein as being "fixed to", "fastened to", or "mounted to" another element may be directly disposed on the other element, or may be fixed or fastened to the other element with one or more elements in between. An element referred to herein as "connected to" another element may be connected to the other element directly or with one or more elements in between. The terms "vertical", "horizontal", "left", "right", "in", "out" and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

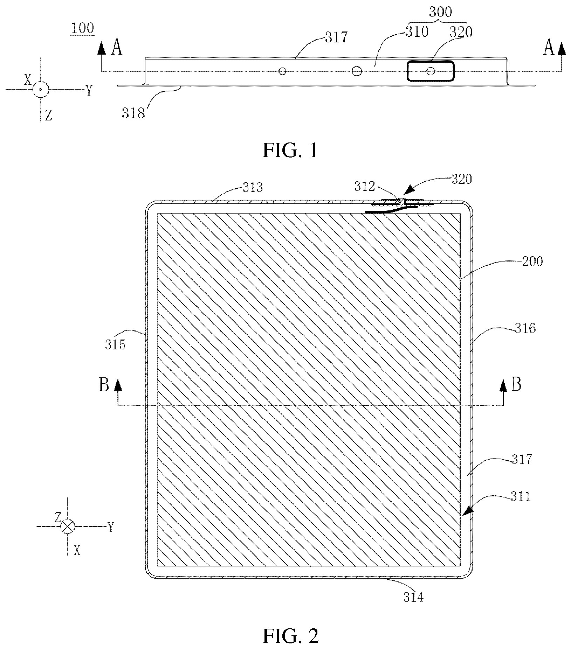

As shown in FIG. 1 to FIG. 2, FIG. 2 is a schematic structural diagram of FIG. 1 sectioned along a line AA. An electrochemical device 100 according to an embodiment of this application includes an electrode assembly 200 and a housing 300. An accommodation cavity 311 is formed in the housing 300. The electrode assembly 200 is accommodated in the accommodation cavity 311. The electrode assembly 200 is electrically connected to the housing 300.

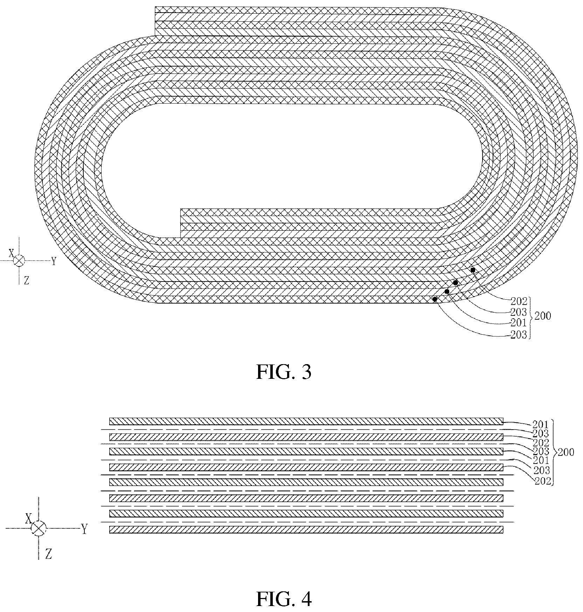

Referring to FIG. 2 to FIG. 4, the electrode assembly 200 includes a first electrode plate 201, a second electrode plate 202, and a separator 203. The separator 203 is disposed between the first electrode plate 201 and the second electrode plate 202. The first electrode plate 201 and the second electrode plate 202 are of different polarities. The separator 203 is configured to reduce the risk of a short-circuit between the first electrode plate 201 and the second electrode plate 202. The electrode assembly 200 may assume a structure that is at least one of a jelly-roll structure or a stacked structure. As an example, in one circumstance, as shown in FIG. 3, the first electrode plate 201, the second electrode plate 202, and the separator 203 are stacked and wound to form a jelly-roll structure. In another circumstance, as shown in FIG. 4, there are a plurality of first electrode plates 201, second electrode plates 202, and separators 203. The plurality of first electrode plates 201, the plurality of second electrode plates 202, and the plurality of separators 203 are stacked along a thickness direction of the separator 203. A plurality of first electrode plates 201 of the same polarity are connected to each other. A plurality of second electrode plates 202 of the same polarity are connected to each other, so as to form a stacked structure. In this case, the thickness direction of the separator 203 is the thickness direction of the electrode assembly 200.

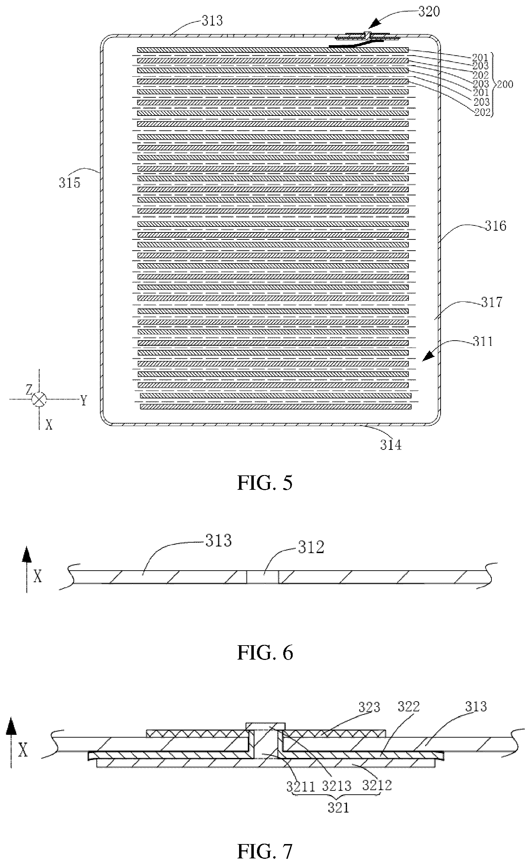

In some embodiments, as shown in FIG. 3 and FIG. 4, the thickness direction of the electrode assembly 200 may be the same as a thickness direction Z of the housing 300. In this case, the electrode assembly 200 may assume a jelly-roll structure or a stacked structure. In some other embodiments, the thickness direction of the electrode assembly 200 may be different from the thickness direction Z of the housing 300. For example, as shown in FIG. 5, the thickness direction of the electrode assembly 200 is perpendicular to the thickness direction Z of the housing 300. In this case, the electrode assembly 200 assumes a stacked structure.

Referring to FIG. 2, FIG. 6, and FIG. 7, FIG. 6 is a schematic diagram of a part of the housing 300, and FIG. 7 is a schematic diagram of a part of FIG. 2. The housing 300 includes a first housing 310 and an electrode post assembly 320. An accommodation cavity 311 is formed in the first housing 310. A through mounting hole 312 is created on the first housing. The mounting hole 312 communicates with the accommodation cavity 311. The electrode post assembly 320 is mounted to the first housing 310 and seals the mounting hole 312 to reduce the risk of leaking the electrolyte solution in the accommodation cavity 311 out of the first housing 310 through the mounting hole 312.

In some embodiments, the first housing 310 may be made of a metal material or an alloy material. When the first housing 310 is connected to a positive electrode, the first housing 310 may be an aluminum housing or an aluminum alloy housing. The aluminum alloy housing includes Al, and further includes one or more of Mn, Cr, Ni, Co, Cu, Fe, Mg, Si, Ti, V, or Zn, thereby reducing the risk of the first housing 310 being corroded by the electrolyte solution. In some embodiments, when the first housing 310 is connected to a negative electrode, the first housing 310 may be a steel housing. The steel housing includes Fe and C, and the steel housing may further include one or more of Ni, Co, Al, Mn, Cr, Cu, Mg, Mo, S, Si, Ti, V, Pb, Sb, N, or P, thereby reducing the risk of the first housing 310 being corroded by the electrolyte solution. In some embodiments, when the first housing 310 is a steel housing, a nickel (Ni) layer may be disposed on a surface of the first housing 310, the surface being oriented toward the electrode assembly 200, thereby further reducing the risk of the first housing 310 being corroded by the electrolyte solution. In some embodiments, a nickel (Ni) layer may be disposed on a surface of the first housing 310, the surface being oriented back from the electrode assembly 200, thereby reducing the risk of the first housing 310 being corroded by the external environment. In some other embodiments, the first housing 310 may be made of an insulating material. In this case, two electrode post assemblies 320 may be mounted on the first housing 310. One of the electrode post assemblies 320 is electrically connected to the first electrode plate 201, and the other electrode post assembly 320 is electrically connected to the second electrode plate 202.

In some embodiments, referring to FIG. 1 and FIG. 2 together, the first housing 310 includes a first side plate 313, a second side plate 314, a third side plate 315, a fourth side plate 316, and a first plate 317 that are connected. The first side plate 313, the second side plate 314, the third side plate 315, and the fourth side plate 316 are all connected to the same surface of the first plate 317, and close in to form an accommodation cavity 311. The first side plate 313 is opposite to the second side plate 314, and the third side plate 315 is opposite to the fourth side plate 316. A mounting hole 312 is created on any one of the first side plate 313, the second side plate 314, the third side plate 315, or the fourth side plate 316. The specific position of the mounting hole depends on actual needs. Understandably, the first side plate 313, the second side plate 314, the third side plate 315, the fourth side plate 316, and the first plate 317 may be made in one piece directly by die-casting or sheet metal stamping or other means, or may be made by injection molding, or may be made in other manners. The manufacturing manner is not limited to the examples mentioned herein, but may are selected depending on the material of the first housing 310.

In some embodiments, referring to FIG. 1, the first housing 310 further includes a second plate 318. The first side plate 313, the second side plate 314, the third side plate 315, and the fourth side plate 316 are all connected to the second plate 318. During assembling of the electrochemical device 100, the electrode assembly 200 may be loaded into the accommodation cavity 311, and then the second plate 318 may be connected to the first side plate 313, the second side plate 314, the third side plate 315, and the fourth side plate 316, thereby encapsulating the electrode assembly 200 in the first housing 310. In some embodiments, a part of the housing, in which the accommodation cavity 311 is formed, may be made by stamping a sheet material. After the electrode assembly 200 is placed into the accommodation cavity 311, a part of the sheet material is folded to form a second plate 318. The second plate 318 covers the accommodation cavity 311. The first side plate 313, the second side plate 314, the third side plate 315, and the fourth side plate 316 are all connected to the second plate 318.

For ease of description, the structure of the electrochemical device 100 of this application is further elaborated below by using an example in which a mounting hole 312 is created on the first side plate 313.

As shown in FIG. 7, the electrode post assembly 320 includes a rivet 321, a first gasket 322, and a second gasket 323. Both the first gasket 322 and the second gasket 323 are mounted to the rivet 321. The rivet 321 is connected to the electrode assembly 200, so that the rivet 321 can serve as one of the electrodes of the electrochemical device 100.

The rivet 321 includes a shaft portion 3211, a first end portion 3212, and a second end portion 3213. The shaft portion 3211 passes through the mounting hole 312. The first end portion 3212 is located at one end of the shaft portion 3211, and the second end portion 3213 is located at another end of the shaft portion 3211. Viewed along the first direction X, the projection of the shaft portion 3211 is located inside the projection of the first end portion 3212 and the projection of the second end portion 3213. The first direction X is an axial extension direction of the shaft portion 3211. The first direction X is perpendicular to the thickness direction Z of the housing 300. It is defined that a direction perpendicular to both the first direction X and the thickness direction Z of the housing 300 is a second direction Y. The first gasket 322 surround the shaft portion 3211. At least a part of the first gasket 322 is disposed between the first end portion 3212 and the first side plate 313 in the first direction X. The second gasket 323 surround the shaft portion 3211. The second gasket 323 is disposed between the second end portion 3213 and the first side plate 313 in the first direction X. Understandably, one of the first end portion 3212 or the second end portion 3213 needs to be disposed inside the accommodation cavity 311, and the other needs to be disposed outside the first housing 310. The specific arrangement depends on actual needs.

For ease of description, the following describes this application by using an example in which the first end portion 3212 is located inside the first accommodation cavity 311 and the second end portion 3213 is located outside the first housing 310.

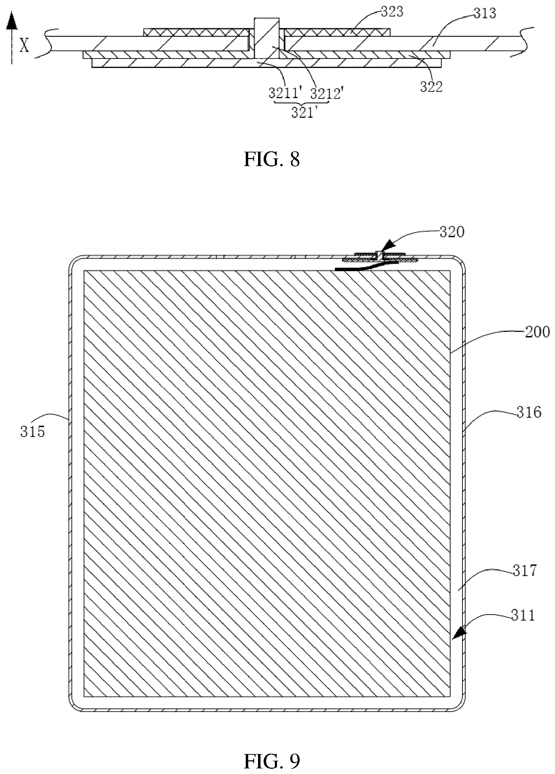

The rivet 321 is formed by performing a riveting process on the rivet feedstock 321'. As shown in FIG. 8, FIG. 8 is a schematic diagram before the rivet feedstock 321' is subjected to a riveting process. The rivet feedstock 321' includes a countersink 3211' and a connecting portion 3212' connected to the countersink 3211'. The projection of the connecting portion 3212' in the first direction X is located inside the projection of the countersink 3211'. An end of the connecting portion 3212', which is away from the countersink 3211', is deformed by pressure after passing through the mounting hole 312, so that a shaft diameter at this end expands and deforms to form the rivet 321 shown in FIG. 7. At this time, the countersink 3211' forms a first end portion 3212 after being deformed under pressure. An end of the connecting portion 3212', which is away from the countersink 3211', forms a second end portion 3213 after being deformed under pressure. During the riveting, the part located between the countersink 3211' and the first housing 310 is subjected to a squeezing force, that is, the first gasket 322 is squeezed, thereby forming a sealed region at the mounting hole 312, and in turn, reducing the risk of leaking the electrolyte solution out of the first housing 310 through the mounting hole 312.

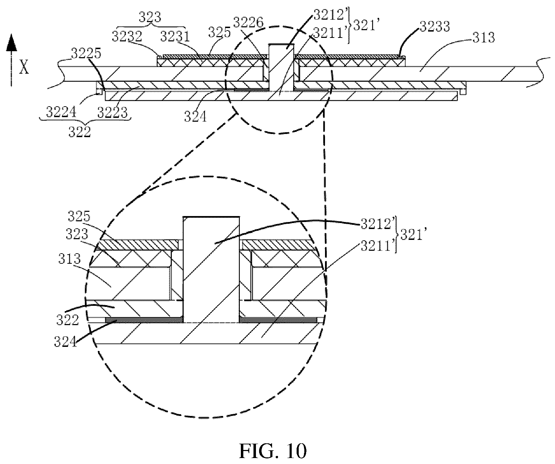

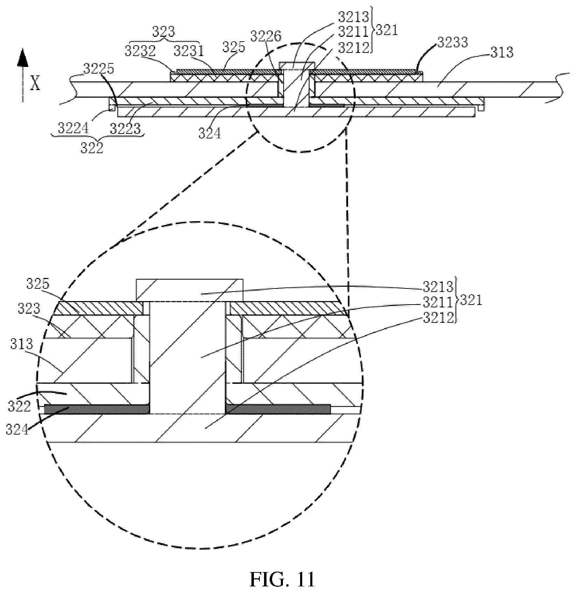

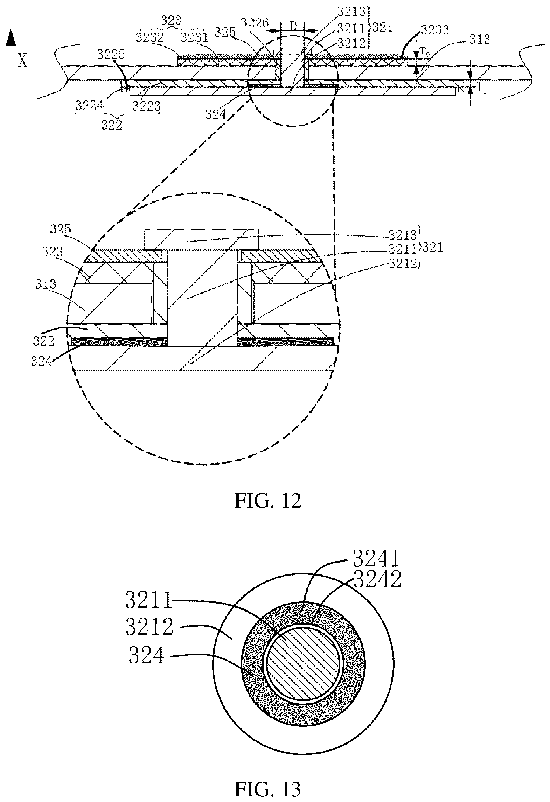

The applicant hereof has found that the compression force of the first gasket 322 and the second gasket 323 is primarily provided by the deformation of the end portion of the rivet feedstock 321' under pressure. Regions on the first gasket 322 and the second gasket 323, which are close to the shaft portion 3211 of the rivet 321, are subjected to a large force. Regions on the first gasket 322 and the second gasket 323, which are away from the shaft portion 3211 of the rivet 321, are subjected to a small force. A part of the first gasket 322 and a part of the second gasket 323, which are close to the shaft portion 3211, are compressed to a high degree. A part of the first gasket and a part of the second gasket, which are away from the shaft portion 3211, are compressed to a low degree. Consequently, the part of the first gasket 322 and the part of the second gasket 323, which are away from the shaft portion 3211, are warped against the surface of the first side plate 313. In the circumstance shown in FIG. 7, a gap exists at a sealing interface between the first gasket 322 and the first side plate 313, and a sealing interface between the second gasket 323 and the first side plate, thereby reducing the sealing effect of the sealed region, posing a risk that the electrolyte solution leaks out of the first housing 310 through the sealed region, and impairing the safety of the electrochemical device 100. For this reason, the application hereof further designs the structure of the electrode post assembly 320 to improve the sealing effect when the electrode post assembly 320 is applied to the first housing 310. The specific technical solution is as follows:
In some embodiments, referring to FIG. 9 to FIG. 11 together, FIG. 9 is a cross-sectional view when the electrode assembly 320 is mounted to the first housing 310 according to an embodiment; FIG. 10 is a schematic diagram before a rivet 321 in the electrode post assembly 320 is subjected to a riveting process; FIG. 11 is a schematic diagram of change of the structure between the rivet 321 and the first housing 310 during riveting; and FIG. 12 is a schematic diagram of the structure between the rivet 321 and the first housing 310 after completion of a riveting process. The electrode post assembly 320 further includes a pressing piece 324 in addition to the rivet 321, the first gasket 322, and the second gasket 323. The pressing piece 324 of the electrode post assembly 320 is disposed around the shaft portion 3211, and located between the first end portion 3212 and the first gasket 322. Viewed along the first direction X, the projection of the pressing piece 324 is located inside the projection of the first end portion 3212. That is, the area of the surface of the pressing piece 324 is less than the area of the surface of the first end portion 3212.

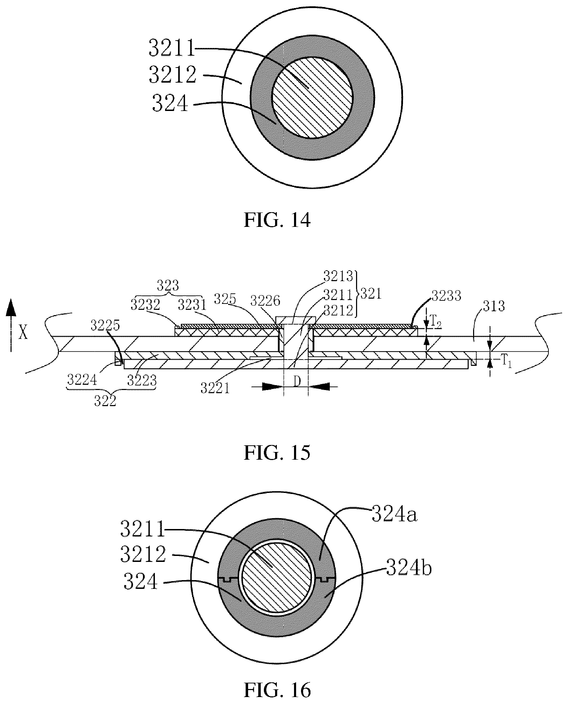

The pressing piece 324 disposed around the shaft portion 3211 may be understood to mean that the pressing piece 324 surround the shaft portion 3211 and the pressing piece 324 is in contact with or in clearance fit with the surface of the shaft portion 3211. Specifically, referring to FIG. 13 to FIG. 14, FIG. 13 is a top view when the pressing piece 324 is assembled to the shaft portion 3211. The pressing piece 324 includes a first surface 3241 and a second surface 3242 connected to the first surface 3241. The first surface 3241 abuts the first end portion 3212. The second surface 3242 is an inner wall face of the pressing piece 324 toward the shaft portion 3211. The second surface 3242 is in contact or out of contact with the surface of the shaft portion 3211. In this embodiment, as shown in FIG. 14, the second surface 3242 of the pressing piece 324 is in contact with the shaft portion 3211, thereby improving the hermeticity between the pressing piece 324 and the shaft portion 3211, and in turn, reducing the electrolyte leakage risk of the electrochemical device 100.

In this way, when the rivet 321 is riveted to the first housing 310, the first end portion 3212 is subjected to the force of the shaft portion 3211, and therefore, presses against the pressing piece 324 and fits the surface of the first gasket 322; and the second end portion 3213 is subjected to the force of the shaft portion 3211, and therefore, presses against the second gasket 323 and fits the first housing 310. Along the first direction X, overlapping parts of the pressing piece 324, the first end portion 3212, the first gasket 322, the first housing 310, the second gasket 323, and the second end portion 3213 form a sealed region on one side of the mounting hole 312. Moreover, because the area of the surface of the pressing piece 324 is less than the area of the surface of the first end portion 3212, compared to the technical solution in which the first end portion 3212 directly presses against the first gasket 322, the technical solution in this embodiment lets the first end portion 3212 indirectly press against the first gasket 322 through the pressing piece 324. The pressure exerted by the pressing piece 324 on the first gasket 322 is greater than the pressure exerted when the first end portion 3212 directly presses against the first gasket 322. This increases the degree of deformation of a part of the first gasket 322, the part being pressed by the pressing piece 324. Due to the tendency to restore the original shape, the first gasket 322 abuts the pressing piece 324 more closely, thereby improving the hermeticity at the contact position between the first gasket 322 and the pressing piece 324. Therefore, when applied to the first housing 310, the electrode post assembly 320 of this embodiment improves the hermeticity of the sealed region at the mounting hole 312, and improves the safety of the electrochemical device 100. In addition, assuming that the same sealing effect is achieved, a pressing piece 324 is added in this application so that the first end portion 3212 indirectly presses against the first gasket 322. Compared with the technical solution in which the first end portion 3212 directly presses against the first gasket 322, this application increases the overall thickness of the part between the first end portion 3212 and the second end portion 3213. The amount of deformation required for deforming the shaft portion 3211 of the rivet 321 in the first direction X becomes smaller, thereby reducing the risk that the edge part of the first gasket 322 is warped against the first housing 310 in the first direction X, and improving the hermeticity of the electrochemical device 100 at the mounting hole 312.

Understandably, because the overlapping parts of the pressing piece 324, the first end portion 3212, the first gasket 322, the first housing 310, the second gasket 323, and the second end portion 3213 in the first direction X form a sealed region at the mounting hole 312. The non-overlapping parts of the first end portion 3212 and the pressing piece 324 are in clearance fit with the first gasket 322, and the clearance does not affect the hermeticity of the sealed region. The first gasket 322 is made of a material of insulating properties, for example, polyethylene, polypropylene, polytetrafluoroethylene, or fluororubber; Alternatively, the first gasket 322 may be made of a mixture of a variety of other known materials, such as a mixture of at least two of polyethylene, polypropylene, polytetrafluoroethylene, or fluororubber. In this embodiment, the thickness of the first gasket 322 along the first direction X is T₁ mm, satisfying: 0.1 ≤ T₁ ≤ 5. When the above relation is satisfied, the thickness T₁ of the first gasket 322 in the first direction X is appropriate, thereby reducing the risk that the first gasket 322 is unduly thin and crushed during riveting, and also reducing the footprint of the first gasket 322.

In some embodiments, the first gasket 322 is made of a plastic material. As shown in FIG. 15, FIG. 15 is a schematic diagram of a partial structure in FIG. 1 sectioned along a line AA, and FIG. 15 hides the pressing piece 324. An accommodation trough 3221 is created on the first gasket 322. The shaft portion 3211 runs through the bottom of the accommodation trough 3221. The pressing piece 324 is at least partially accommodated in the accommodation trough 3221. That is, the thickness of the pressing piece 324 is greater than the depth of the bottom of the accommodation trough 3221. Viewed along the first direction X, the projection of the pressing piece 324 is located inside the accommodation trough 3221. In this way, when the first end portion 3212 pushes the pressing piece 324 to closely fit the bottom of the accommodation trough 3221, the surface of the first gasket 322 closely fits the wall face of the first housing 310. Therefore, the part of the first housing 310, the part of the first gasket 322, and the part of the first end portion 3212, which overlap the pressing piece 324 in the first direction X, form a sealed region, thereby reducing the risk that the unpressed part of the first gasket 322 is warped against the first housing 310 and leads to a decrease in the hermeticity, and in turn, improving the safety of the electrochemical device 100. In other words, even if the edge of the unpressed part of the first gasket 322 is warped against the first housing 310, a part of the first housing 310, a part of the first gasket 322, and a part of the first end portion 3212, which overlap the pressing piece 324 in the first direction X, can also form a sealed region on one side of the mounting hole 312.

In some other embodiments, the first gasket 322 is made of an elastic material. When the pressing piece 324 is stressed by the rivet 321 in a riveting process to squeeze the first gasket 322, the first gasket 322 is deformed under pressure to form a recessed region. As shown in FIG. 12, at least a part of the pressing piece 324 is embedded into the recessed region of the first gasket 322. In other words, the first gasket 322 is deformed by the squeezing action of the pressing piece 324, so that the first gasket 322 forms a space available for being filled with the pressing piece 324. The first gasket 322 provides the filling space for the pressing piece 324 by compressing a part of the material, but does not provide the filling space for the pressing piece 324 by cutting away a part of the material. Therefore, compared to the technical solution that provides the filling space for the pressing piece 324 by creating a groove, the degree of compression on the first gasket 322 in this embodiment is higher, thereby increasing the hermeticity of the overlapping parts and improving the safety of the electrochemical device 100. The overlapping parts are a part of the first housing 310, a part of the first gasket 322, and a part of the first end portion 3212, and overlap the pressing piece 324 in the first direction X.

In some embodiments, as shown in FIG. 12, the first gasket 322 includes a first body 3223 and a first flange 3224. The first body 3223 surround the shaft portion 3211 and disposed between the first end portion 3212 and the first housing 310. The first flange 3224 is formed by extending an edge of the first body 3223 away from the second gasket 323. The first body 3223 and the first flange 3224 define a first groove 3225. On the one hand, the first flange 3224 reduces the impact caused by free electrolyte solution on the first end portion 3212 and the edge of the first gasket 322, and reduces the possibility that the electrolyte solution enters the clearance between the first end portion 3212 and the pressing piece 324 from the edge of the first body 3223, thereby reducing the risk that the electrolyte solution leaks out of the first housing 310 along the contact surface between the first gasket 322 and the pressing piece 324, and along the contact surface between the first end portion 3212 and the pressing piece 324. On the other hand, this reduces the risk of swelling when the first gasket 322 is made of a polymer material, and improves the hermeticity at the mounting hole 312. Moreover, the first flange 3224 reduces the possibility of contact between the first end portion 3212 and the first housing 310, and reduces the risk of a short-circuit between the first end portion 3212 and the first housing 310.

Further, both the pressing piece 324 and the first end portion 3212 are disposed in the first groove 3225, thereby shortening the length of the electrode post assembly 320 in the first direction X without impairing the hermeticity, and in turn, improving the hermeticity at the mounting hole 312.

In some embodiments, the first gasket 322 further includes an extension portion 3226. The extension portion 3226 is formed by extending the first body 3223 toward the second gasket 323. The extension portion 3226 is disposed between the wall of the mounting hole 312 and the shaft portion 3211. Understandably, after completion of the riveting process, the shaft diameter of the shaft portion 3211 becomes larger, and the extension portion 3226 is squeezed by the shaft portion 3211, so that the extension portion 3226 can fill the clearance between the shaft portion 3211 and the mounting hole 312, thereby improving the hermeticity at the mounting hole 312.

In some embodiments, the shape of the first groove 3225 fits the first end portion 3212, thereby facilitating smoother embedding of the first end portion 3212 into the first groove 3225, and improving the hermeticity of the electrochemical device 100. As an example, the first end portion 3212 is in a cylindrical shape, the first groove 3225 is in a circular groove shape, the first end portion 3212 is in a square block shape, and the first groove 3225 is in a square shape.

The second gasket 323 is also made of a material of insulating properties, for example, polyethylene, polypropylene, polytetrafluoroethylene, or fluororubber; Alternatively, the second gasket 323 may be made of a mixture of a variety of other known materials, such as a mixture of at least two of polyethylene, polypropylene, polytetrafluoroethylene, or fluororubber. In this embodiment, as shown in FIG. 12, the thickness of the second gasket 323 along the first direction X is T₂ mm, satisfying: 0 ≤ T₂ ≤ 5. When the above relation is satisfied, the thickness T₂ of the second gasket 323 in the first direction X is appropriate, thereby reducing the risk that the second gasket 323 is unduly thin and crushed during riveting, and also reducing the footprint of the second gasket 323.

In some embodiments, as shown in FIG. 12, the second gasket 323 includes a second body 3231 and a second flange 3232. The second body 3231 surround the shaft portion 3211 and disposed between the second end portion 3213 and the first housing 310 to separate the second end portion 3213 from the first housing 310. The second flange 3232 is formed by extending an edge of the second body 3231 away from the first gasket 322. The second body 3231 and the second flange 3232 define a second groove 3233.

The pressing piece 324 may be made of an insulating material or a metal material, depending on actual needs. When the pressing piece 324 is made of an insulating material, the hardness of the pressing piece 324 needs to be greater than the hardness of the first gasket 322 so as to reduce the risk of deforming the pressing piece 324 but without deforming the first gasket 322 when the first end portion 3212 presses against the pressing piece 324 to exert a pressure on the first gasket 322. When the pressing piece 324 is made of a metal material, the material of the pressing piece 324 needs to avoid a redox reaction with the rivet 321 at a high potential, so as to reduce the risk that the hermeticity of the electrochemical device 100 is reduced by the reaction between the pressing piece 324 and the rivet 321. When the pressing piece 324 is made of metal, the metal may be aluminum, copper, aluminum alloy, or copper alloy.

The hardness of the pressing piece 324 and the hardness of the first gasket 322 may be measured and compared by using an existing hardness measurement method, such as a Vickers hardness measurement method suitable for measuring various types of materials, or a Rockwell hardness measurement method for measuring the hardness of relatively soft materials such as steel and non-ferrous materials. The hardness measurement method may be selected depending on the materials of the pressing piece 324 and the first gasket 322.

In some embodiments, viewed along the first direction X, the pressing piece 324 is in a closed shape around the shaft portion 3211. In other words, the shape of the pressing piece 324 is a block with a through-hole, for example, an annular block, a square block with a through-hole, or another shape, as long as the pressing piece can be disposed around the shaft portion 3211. In some embodiments, as shown in FIG. 16, the pressing piece 324 may be formed by splicing two parts. For example, the pressing piece 324 may include a first semi-circular block 324a and a second semi-circular block 324b. A protruding portion is disposed on one of the first semi-circular block 324a or the second semi-circular block 324b, and a recess is created on the other of the first semi-circular block or the second semi-circular block. The protruding portion can fit into the recess so that the first semi-circular block and the second semi-circular block are spliced to form the pressing piece 324. In some embodiments, the pressing piece 324 may be molded in one piece, for example, by an injection molding or die-casting process. The pressing piece 324 molded in one piece increases the hermeticity of the electrochemical device 100, and improves the safety of the electrochemical device 100.

In some embodiments, viewed along the first direction X, the projection of the edge of the second end portion 3213 is located inside the projection of the pressing piece 324. In other words, when viewed from the first direction X, in a direction perpendicular to the first direction X, the edge of the second end portion 3213 does not extend beyond the edge of the pressing piece 324, thereby making it convenient for the second end portion 3213 to be compressed by the pressing piece 324, increasing the area on which the first gasket 322 is compressed by the second end portion 3213, and in turn, increasing the degree of compression on the first gasket 322, and improving the hermeticity of the electrochemical device 100.

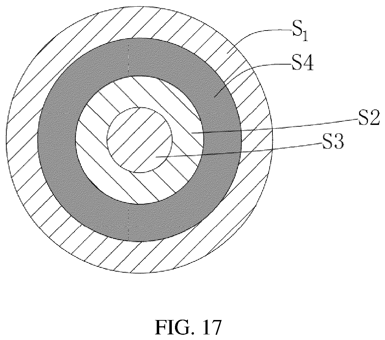

In some embodiments, as shown in FIG. 17, viewed along the first direction X, a projected area of the first end portion 3212 is S₁, a projected area of the shaft portion 3211 is S₃, and a projected area of the pressing piece 324 is S₄, satisfying: S₄/(S₁ - S₃) ≤ 1/2. When the above relation is satisfied, an edge part of the pressing piece 324, which is away from the shaft portion 3211, receives an appropriate force of the rivet 321, and the first gasket 322, the pressing piece 324, and the first end portion 3212 abut each other closely, thereby improving the hermeticity of the electrode post assembly 320 at the mounting hole 312.

Further, a projected area of the second end portion 3213 is S₂, the projected area of the shaft portion 3211 is S₃, and the projected area of the pressing piece 324 is S₄, satisfying: S₄/(S₂ - S₃) ≤ 1/2. When the above relation is satisfied, the edge part of the pressing piece 324, which is away from the shaft portion 3211, receives an appropriate force of the rivet 321, and the first gasket 322, the pressing piece 324, and the first end portion 3212 abut each other more closely, thereby improving the hermeticity of the electrode post assembly 320 at the mounting hole 312.

In some embodiments, the shaft portion 3211 is cylindrical, and the diameter of the shaft portion 3211 is D mm, satisfying: 0.3 ≤ D ≤ 5. When the dimensions fall within such a range, the cross-sectional area of the shaft portion 3211 is appropriate, thereby reducing the risk that the shaft portion 3211 occupies an excessive area of the first housing 310, lowering the dimensional requirement on the shaft portion 3211 at the mounting hole 312 of the first housing 310, reducing the risk that the material of the first housing 310 is excessively cut away at the mounting hole 312, increasing the strength of the first housing 310, and ensuring a high current-carrying capacity of the rivet 321. Understandably, the diameter of the shaft portion 3211 may be measured by a measurement tool such as a vernier caliper.

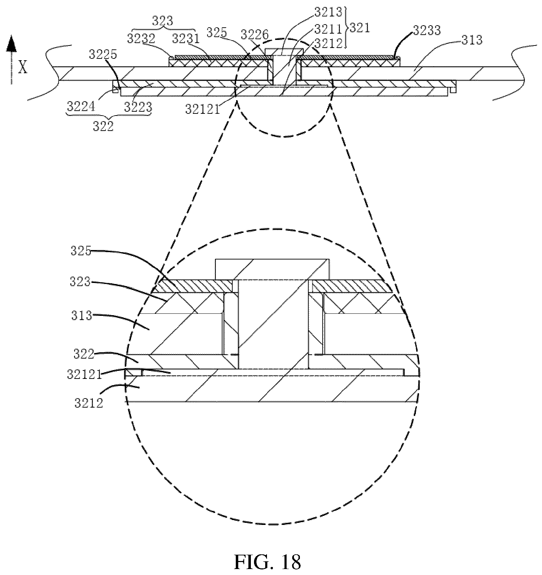

In some embodiments, the pressing piece 324 and the first end portion 3212 are a one-piece member. In other words, a boss 32121 is directly disposed on a side of the first end portion 3212, the side being connected to the shaft portion 3211. As shown in FIG. 18, the pressing piece 324 may be canceled, and the boss 32121 directly serves as a pressing piece 324, thereby also achieving the sealing effect for the sealed region, reducing the operations required for mounting the electrode post assembly 320 to the first housing 310, and improving the assembling efficiency of the electrochemical device 100.

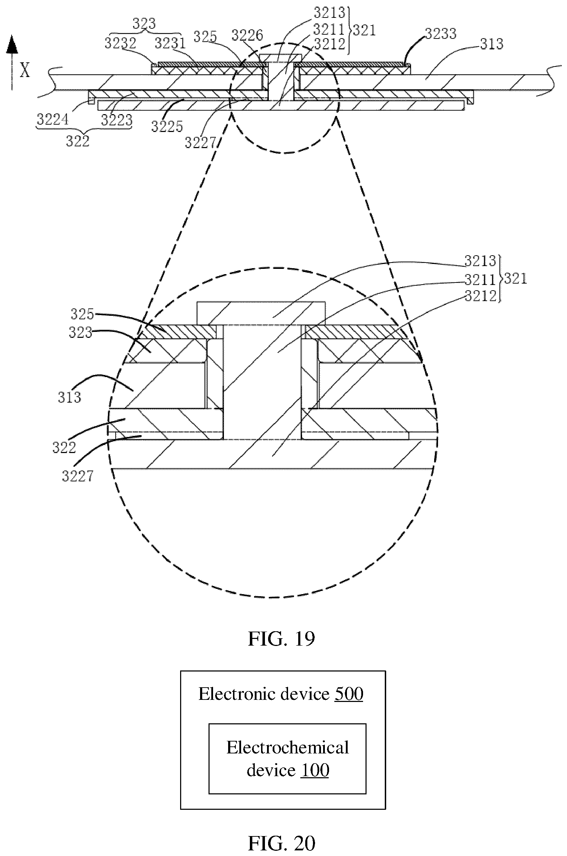

In some other embodiments, the pressing piece 324 and the first gasket 322 are a one-piece member. In other words, a bulge 3227 protruding beyond the surface is directly disposed on a side of the first gasket 322, the side being oriented toward the first end portion 3212. As shown in FIG. 19, the bulge 3227 serves as a pressing piece 324. When the rivet 321 is mounted to the first housing 310, the bulge 3227 is compressed under the squeezing action of the first end portion 3212. In this way, the bulge 3227, the first end portion 3212, and the first housing 310 form a sealed region, thereby reducing the operations required for mounting the electrode post assembly 320 to the first housing 310, and improving the assembling efficiency of the electrochemical device 100.

In some embodiments, still referring to FIG. 12, the electrode post assembly 320 further includes a third gasket 325. The third gasket 325 surround the shaft portion 3211, and disposed between the second end portion 3213 and the second gasket 323. Viewed along the first direction X, the projection of the third gasket 325 is located inside the projection of the second gasket 323. Moreover, at least a part of the third gasket 325 is located in the second groove 3233. With the third gasket 325 disposed, the second end portion 3213 indirectly presses the second gasket 323 through the third gasket 325. Compared to the technical solution in which the second end portion 3213 directly presses the second gasket 323, the technical solution hereof reduces the degree of deformation of the pressed second gasket 323 and reduces the risk that the edge part of the second gasket 323 is warped against the first housing 310. In addition, under the action of the second flange 3232, the risk of contact between the second end portion 3213 and the first housing 310 is reduced, thereby reducing the risk of a short-circuit of the electrochemical device 100, and improving the safety of the electrochemical device 100. In some embodiments, in the first direction X, the projection of the pressing piece 324 is located inside the projection of the third gasket 325. Such an arrangement facilitates uniform transfer of the sealing force of the second end portion 3213 to the pressing piece 324, thereby improving the sealing effect. In some embodiments, the third gasket 325 is made of a metal material. Such an arrangement reduces the possibility that excessive stress is exerted by the second end portion 3213 on the second gasket 323 in the sealing process and impairs the sealing effect. Such an arrangement also provides a position at which the stress works in the sealing process of the second end portion 3213. In some embodiments, the third gasket is made of a material including aluminum, copper, aluminum alloy, or copper alloy.

Understandably, the specific number of electrode post assemblies 320 is set according to actual needs. As an example, the number of electrode post assemblies 320 is one, and the electrode post assembly 320 is mounted to the first housing 310. The first electrode plate 201 is connected to the rivet 321, and the second electrode plate 202 is electrically connected to the first housing 310. Of the electrode post assembly 320 and the first housing 310, one serves as a positive electrode of the electrochemical device 100, and the other serves as a negative electrode. As an example, the number of electrode post assemblies 320 is two, and both electrode post assemblies 320 are mounted to the first housing 310. The two electrode post assemblies 320 may be mounted to the same side or different sides of the first housing 310. The first electrode plate 201 is connected to the rivet 321 of one electrode post assembly 320, and the second electrode plate 202 is connected to the rivet 321 of the other electrode post assembly 320. In this way, the two electrode post assemblies 320 serve as a positive electrode and a negative electrode of the electrochemical device 100 respectively.

An embodiment of this application provides an electrochemical device 100, including an electrode assembly 200 and a housing 300. An accommodation cavity 311 is formed in the housing 300. The electrode assembly 200 is accommodated in the accommodation cavity 311. The housing 300 includes a first housing 310 and an electrode post assembly 320. The electrode post assembly 320 includes a rivet 321, a first gasket 322, a second gasket 323, and a pressing piece 324. The rivet 321 includes a shaft portion 3211, a first end portion 3212, and a second end portion 3213. When the rivet 321 is riveted to the first housing 310, the first end portion 3212 is subjected to the force of the shaft portion 3211, and therefore, presses against the pressing piece 324 and fits the surface of the first gasket 322; and the second end portion 3213 is subjected to the force of the shaft portion 3211, and therefore, presses against the second gasket 323 and fits the first housing 310. Along the first direction X, overlapping parts of the pressing piece 324, the first end portion 3212, the first gasket 322, the first housing 310, the second gasket 323, and the second end portion 3213 form a sealed region on one side of the mounting hole 312. Moreover, because the area of the surface of the pressing piece 324 is less than the area of the surface of the first end portion 3212, compared to the technical solution in which the first end portion 3212 directly presses against the first gasket 322, the technical solution in this application lets the first end portion 3212 indirectly press against the first gasket 322 through the pressing piece 324. The pressure exerted by the pressing piece 324 on the first gasket 322 is greater than the pressure exerted when the first end portion 3212 directly presses against the first gasket 322, thereby improving the degree of compression on the pressed part of the first gasket 322. Therefore, when applied to the first housing 310, the electrode post assembly 320 of this embodiment improves the hermeticity of the sealed region at the mounting hole 312, and improves the safety of the electrochemical device 100.

As shown in FIG. 20, another embodiment of this application provides an electronic device 500, including the electrochemical device 100 disclosed in the preceding embodiment. The electronic device 500 according to this application is not particularly limited, and may be any electronic device known in the prior art. For example, the electronic device 500 includes, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Another embodiment of this application further provides a method for manufacturing an electrochemical device. The method includes the following steps:
Step S201: Preparing a housing;

The structure of the housing 300 is the same as that of the housing 300 mentioned in the preceding embodiment, and specifically, includes a first housing 310 and an electrode post assembly 320. The first housing 310 includes a first side plate 313, a second side plate 314, a third side plate 315, a fourth side plate 316, a first plate 317, and a second plate 318. A mounting hole 312 is created on the first housing 310. The electrode post assembly 320 is mounted to the mounting hole 312.

A process of preparing the housing includes the following steps:
Step S2011: Providing an electrode post assembly feedstock and the first housing.

The electrode post assembly feedstock includes the rivet feedstock 321' mentioned in the preceding embodiment, a first gasket 322, a second gasket 323, and a pressing piece 324. The first gasket 322, the second gasket 323, and the pressing piece 324 are all mounted to the rivet feedstock 321'.

Step S2012: Mounting the electrode post assembly feedstock to the first housing, and performing a riveting process on the electrode post assembly feedstock, so that one end of the rivet feedstock 321' forms a second end portion 3213 to obtain an electrode post assembly 320, during which the pressing piece 324 squeezes the first gasket 322 by being stressed in the riveting process.

Step S202: Mounting the electrode assembly 200 into the housing 300.

Further, the first gasket 322 is deformed under pressure to form a recessed region, so that at least a part of the pressing piece 324 is embedded into the recessed region of the first gasket 322.

Through the above steps, a housing 300 of higher hermeticity is obtained. The electrochemical device 100 manufactured by using the housing 300 is of high hermeticity, and the safety of the electrochemical device 100 is improved.

In some embodiments, in the above manufacturing method, the electrode post assembly feedstock further includes a third gasket 325. The third gasket 325 is located on the second gasket 323, and mounted to the rivet feedstock 321'. During riveting of the rivet feedstock 321', stress is applied to the second gasket 323 through the third gasket 325. After the rivet feedstock 321' is riveted, at least a part of the third gasket 325 is located between the second end portion 3213 and the second gasket 323. With the third gasket 325 disposed, the second end portion 3213 indirectly presses the second gasket 323 through the third gasket 325. Compared to the technical solution in which the second end portion 3213 directly presses the second gasket 323, the technical solution hereof reduces the degree of deformation of the pressed second gasket 323 and reduces the risk that the edge part of the second gasket 323 is warped against the first housing 310.

Finally, it is hereby noted that, the foregoing embodiments are merely intended to describe the technical solutions of this application but not to limit this application. Based on the concept of this application, the technical features in the foregoing embodiments or different embodiments may be combined, the steps may be implemented in any order, and many variations may be made to this application in different aspects, which, for brevity, are not provided in detail. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the scope of the technical solutions of the embodiments of this application.

## Claims

1. A housing, **characterized in that** the housing comprises a first housing and an electrode post assembly, the housing defines an accommodation cavity, a through mounting hole is created on the first housing, and the mounting hole communicates with the accommodation cavity;
the electrode post assembly comprises:
a rivet, comprising a shaft portion, a first end portion, and a second end portion, wherein the shaft portion passes through the mounting hole, the first end portion is connected to one end of the shaft portion, the second end portion is connected to another end of the shaft portion, a projection of the shaft portion is located inside a projection of the first end portion and a projection of the second end portion in a first direction, and the first direction is an axial extension direction of the shaft portion;
a first gasket, socketed to the shaft portion, wherein at least a part of the first gasket is disposed between the first end portion and the first housing in the first direction;
a second gasket, socketed to the shaft portion, wherein at least a part of the second gasket is disposed between the second end portion and the first housing in the first direction;
a pressing piece, disposed around the shaft portion, wherein, in the first direction, the pressing piece is disposed between the first end portion and the first gasket, and a projection of the pressing piece is located inside the projection of the first end portion; and
the first end portion coordinates with the second end portion to compress the first gasket and the second gasket to seal the mounting hole.

2. The housing according to claim 1, **characterized in that** the pressing piece is in a closed shape around the shaft portion.

3. The housing according to claim 1, **characterized in that** the pressing piece and the first end portion are a one-piece member; or
the pressing piece and the first gasket are a one-piece member.

4. The housing according to claim 1, **characterized in that**, in the first direction, a projection of an edge of the second end portion is located inside the projection of the pressing piece.

5. The housing according to claim 1, **characterized in that** the pressing piece comprises a first surface and a second surface connected to the first surface, the first surface is adjacent to the second surface, the first surface abuts the first end portion, and the second surface is in contact with a surface of the shaft portion.

6. The housing according to claim 1, **characterized in that** hardness of the pressing piece is greater than hardness of the first gasket.

7. The housing according to claim 1, **characterized in that**, in the first direction, a projected area of the first end portion is S₁, a projected area of the shaft portion is S₃, and a projected area of the pressing piece is S₄, satisfying: S₄/(S₁ - S₃) ≤ 1/2; and/or
in the first direction, a projected area of the second end portion is S₂, a projected area of the shaft portion is S₃, and a projected area of the pressing piece is S₄, satisfying: S₄/(S₂ - S₃) ≤ 1/2.

8. The housing according to claim 1, **characterized in that** the pressing piece is stressed in a riveting process to squeeze the first gasket so that the first gasket is deformed under pressure to form a recessed region, and so that at least a part of the pressing piece is embedded into the recessed region of the first gasket.

9. The housing according to claim 1, **characterized in that** the shaft portion is cylindrical, and a diameter of the shaft portion is D mm, satisfying: 0.3 ≤ D ≤ 5.

10. The housing according to claim 1, **characterized in that** the first gasket comprises a first body and a first flange; and
the first body surround the shaft portion and disposed between the first end portion and the first housing to separate the first end portion from the first housing, the first flange is formed by extending an edge of the first body away from the second gasket, and the first body and the first flange define a first groove.

11. The housing according to claim 10, **characterized in that** both the pressing piece and the first end portion are disposed in the first groove.

12. The housing according to claim 1, **characterized in that** the electrode post assembly further comprises a third gasket; and
the third gasket surround the shaft portion, at least a part of the third gasket is disposed between the second end portion and the second gasket in the first direction, and a projection of the third gasket is located inside a projection of the second gasket.

13. The housing according to claim 12, **characterized in that** the second gasket comprises a second body and a second flange; and
the second body surround the shaft portion and disposed between the second end portion and the first housing in the first direction, and the second flange is formed by extending an edge of the second body away from the first gasket.

14. The housing according to claim 13, **characterized in that** the second body and the second flange define a second groove, and the third gasket is located in the second groove.

15. The housing according to claim 12, **characterized in that**, in the first direction, the projection of the pressing piece is located inside a projection of the third gasket.

16. The housing according to claim 12, **characterized in that** the third gasket is made of a metal material.

17. The housing according to any one of claims 1 to 16, **characterized in that**
the first end portion is located inside the accommodation cavity, and the second end portion is located outside the accommodation cavity.

18. The housing according to any one of claims 1 to 16, **characterized in that** the housing satisfies at least one of the following conditions:
the first housing is a metal housing;
the rivet is made of a material comprising aluminum, copper, aluminum alloy, or copper alloy;
the first gasket is made of a material comprising at least one of polyethylene, polypropylene, polytetrafluoroethylene, or fluororubber;
the second gasket is made of a material comprising at least one of polyethylene, polypropylene, polytetrafluoroethylene, or fluororubber; and
the pressing piece is made of a metal material.

19. The housing according to claim 1, **characterized in that** the second end portion is formed by a riveting process.

20. An electrochemical device, **characterized in that** the electrochemical device comprises:
the housing according to any one of claims 1 to 19; and
an electrode assembly, located in the accommodation cavity, wherein the electrode assembly is electrically connected to the rivet.

21. A method for manufacturing the electrochemical device according to claim 20, **characterized in that** the method comprises the following steps:
preparing the housing; and
mounting the electrode assembly into the housing;
the step of preparing the housing comprises:
providing an electrode post assembly feedstock and the first housing; and
mounting the electrode post assembly feedstock to the first housing, and performing a riveting process on the electrode post assembly feedstock to obtain the electrode post assembly, during which the pressing piece squeezes the first gasket by being stressed in the riveting process.

22. The method according to claim 21, **characterized in that** the first gasket is deformed under pressure to form a recessed region, so that at least a part of the pressing piece is embedded into the recessed region of the first gasket.

23. An electronic device, **characterized in that** the electronic device comprises the electrochemical device according to claim 20.
